# EUROPEAN PATENT SPECIFICATION

(11) **EP 1 245 148 B1**
(45) Date of publication and mention of the grant of the patent: **12.07.2006**
(21) Application number: 02075286.1
(22) Date of filing: 24.01.2002
(51) Int. Cl.: A01G 31/02

(54) **Elongate growing container**
Länglicher Zuchtbehälter
Conteneur de culture allongé

(30) Priority: 24.01.2001 NL 1017179
(43) Date of publication of application: 02.10.2002
(73) Proprietor: W/M Systems B.V., 2587 TX Den Haag (NL)
(72) Inventor: Jansen, Wilhelmus Henricus Antonius, 1619 BZ Andijk (NL)
(74) Representative: van Westenbrugge, Andries

(56) References cited:
- WO-A-99/56527
- FR-A- 2 659 192
- US-A- 4 178 715

## Description

The present invention relates to an elongate growing container, comprising a number of troughs, which are arranged next to one another, and are enclosed, in the vicinity of the ends, by end structures which are common to the said troughs, and a support for the said troughs and the said end structures. An elongate growing container of this type is generally known in the prior art. It comprises a table-like support, in which the end structures are designed as end plates. The table-like support is provided with reinforcement profiled sections which extend transversely with respect to the longitudinal direction of the troughs, i.e. the troughs are supported at various positions over their length. According to the prior art, the troughs can be secured to the end structure in various ways, for example by gluing or cementing.

A drawback of elongate growing containers of this type is that in practice it is not feasible to change the distance between adjacent troughs. It is often desirable to change this distance, since the grower aims to achieve the highest possible density of plants. On the other hand, the density of plants must not be so great that the growth of the separate plants is limited.

Varying the distance between the troughs also has an effect on the ventilation between the troughs and therefore on the growth of the plant in the troughs. This plant may be arranged as a substrate in individual troughs or in some other way in the troughs. Depending on the plant, it is necessary for it to be possible to optimize the distance between the troughs. With existing elongate growing containers, this is difficult if not impossible, and consequently, in practice, growing containers use a different pitch interval for the troughs.

Another drawback is the relatively high material consumption for elongate growing containers of this type.

It is an object of the present invention to avoid these drawbacks. This object is realised in an elongate growing container of the type described above, in that at least at one end of the said troughs, the said end structure comprises an assembly comprising a profiled section, which receives the outer periphery of the elongate troughs, and a clamping part, which is arranged on the trough and clamps at least the side walls of the said trough onto the said receiving profiled section.

According to the invention, the troughs are designed as a supporting part of the structure. This allows the support to be of considerably lighter design and enables the cost price of the elongate growing container to be reduced. As a result of the use of the clamping mechanism described above, it is possible to use the troughs to introduce and transmit forces.

According to an advantageous embodiment of the invention, the trough-receiving profiled section is accommodated exchangeably in the end structure, i.e. the trough-receiving profiled section can easily be removed from the end plates and replaced by a different profiled section. A different profiled section of this type preferably includes a different distance between the receptacles for the troughs, so that the pitch interval between the troughs can be changed particularly easily. It is no longer necessary to break more or less permanent attachments. According to an advantageous embodiment of the invention, the trough-receiving profiled section is designed as a sealing profiled section.

The end structure is preferably embodied in such a manner that it can be used to feed or discharge water to or from the various troughs. Moreover, in the end structure there may be provisions for, for example, providing an ebb-and-flow system. This can be achieved with the aid of overflow devices.

As indicated above, the trough is secured in the corresponding profiled section with the aid of clamping. Clamping can be effected using a clamping part. This clamping part is designed in such a manner that, on the one hand, it engages on the interior of the trough, with the result that the interior of the trough and, more particularly, the side walls thereof are pressed onto the trough-receiving profiled section. On the other hand, the clamping part is fixedly connected to the end structure. All this can be effected, for example, by means of a lever action. This results on the one hand in a sufficient clamping force and, on the other hand, ensures that simple removal, for example exchange of the troughs, is possible.

The fact that the troughs according to the invention also have a supporting function in the structure of the elongate growing container means that it is no longer necessary to fit transverse profiled sections in the support. A simple cross-shaped profiled section is sufficient. This is preferably designed in such a manner that it can also absorb longitudinal forces. In this way, the trough can be pressed onto the other end structure. If the boundary between the end structure and the other end of the trough is made from a deformable material, it is in this way possible to provide a seal at the other end, since the elongate trough presses into the said deformable material and possibly even cuts into it. This compressive force can be applied, for example, by the clamping part described above, i.e. this clamping part supplies not only a downwardly directed force, pressing the side walls of the trough outwards, but also a longitudinal force, which presses the trough onto the rear boundary of the elongate growing container.

It will be understood that the trough can be produced from any material which is known in the prior art. It is preferable to use a coated metal material. It has been found that, for standard dimensions of an elongate growing container of +/- 1600 X +/- 6000, i.e. for an trough length of approximately 6 metres, if steel is used as the material for the trough, a wall thickness of 0.2 to 0.6 mm is sufficient. This contrasts with designs according to the prior art, in which material thicknesses of 0.6 mm are used. It will also be understood that this further reduces the cost price of an elongate growing container and also considerably facilitates handling of this container.

The invention will be explained in more detail below with reference to an exemplary embodiment which is illustrated in the drawing, in which:
Fig. 1 shows a diagrammatic, perspective view of the various components of the elongate growing container according to the invention;
Fig. 2 shows a side view, partially in cross section, of the way in which an trough and the support are assembled;
Fig. 3 shows a view corresponding to that shown in Fig. 2 of the assembled elongate growing container with a system for influencing the water level.

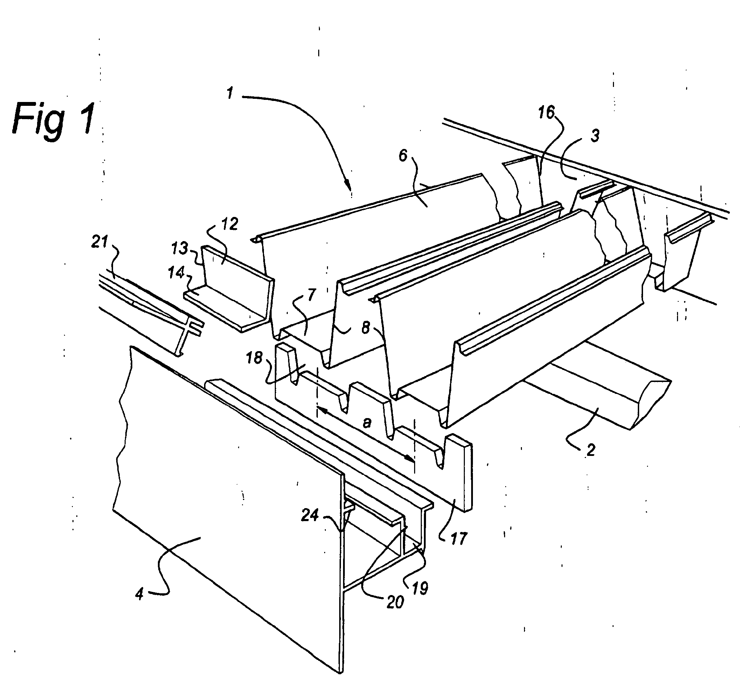

In Fig. 1, an elongate growing container, which is shown in the unassembled state, is denoted by 1. The container comprises a support 2. Support 2 is a rolling container structure, optionally provided with a cross-joint. End plates or end structures are arranged at both ends of the support. At one end, the end plate is denoted by 3, while at the other end it is denoted by 4. A number of troughs 6 are present. Each trough comprises a base part 7 with adjoining side walls. Each base part comprises a part which is slightly raised in the centre, with edge recesses for draining water adjoining it on either side.

A clamping part is denoted by 12. It comprises a wedge-shaped part 13 and an engagement edge 14.

16 denotes a sealing profiled section which is located at the end plate 3. It is a continuous strip of deformable, sealing material. 17 denotes a special sealing profile, provided with a number of cutouts 18. These cutouts 18 match the outer periphery of the trough. In particular, the sloping parts match the side walls of the various troughs. The centre-to-centre distance of the various troughs is determined by distance A of sealing profiled section 17. This distance can be selected as a function of the profiled section.

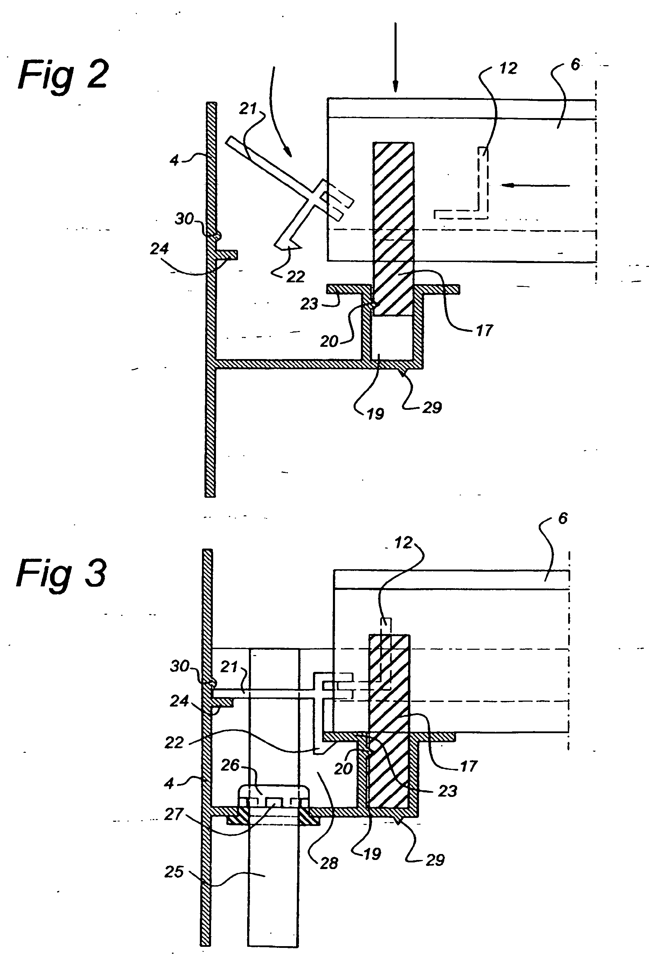

End structure 4 is provided with a receptacle 19, as can be seen in more detail from Figs. 2 and 3. It is designed to receive the sealing profiled section 17. The position of the sealing profiled section 17 is fixed with the aid of an enclosing rib 20. A locking part 21 is likewise illustrated in Figs. 2 and 3. This locking part comprises a hook-shaped part and a supporting edge. 24 denotes a supporting rib on end plate 3. 25 denotes an overflow pipe provided with a closure ring 26, by means of which it is possible to completely or partly close a number of openings 27.

The structure described above is assembled in the following way. The starting point is a support 2 with end plates 3 and 4 connected thereto. End plate 3 is provided with the sealing profiled section 16, while a sealing profiled section 17 is positioned in receptacle 19, such that troughs with the desired centre-to-centre distance a are placed in the elongate growing container which is to be assembled. Then, the corresponding troughs 6 are fitted. Next, the clamping part 12 is arranged in the interior of the trough, at the location of the sealing profiled section 17. The wedge shape 13 is such that, when the clamping part is pressed downwards with the aid of locking part 21, the side walls 8 of the trough 6 are pressed onto the corresponding parts of the sealing profiled section 17. This not only results in a seal, but also allows forces to be transmitted. As can be seen from a comparison of Figs. 2 and 3, locking part 21 can be pressed downwards, during which movement the hook-shaped part 22 engages on lower supporting edge 23. Locking is ensured by thickened part 30. The limit position is reached when the lever of lock 21 comes into contact with rim 24. The height of the latter is selected in such a manner that a stable position is produced. In this way, a particularly high clamping force can be exerted. Consequently, the trough can contribute to the design strength of the elongate growing container.

Controlling the pipe 25 allows the water level within space 25 to be determined. Water can be drained centrally through closure ring 26. Rotation of the closure ring 26 allows the drainage capacity to be set. In this way, it is possible to implement an ebb-and-flow system. 29 denotes a rib, along which any water which condenses on the outside or any leaking water is guided and is forced to leave the elongate growing container from that point. If appropriate, a common collection through can be used for water originating from the overflow pipe 25 and drainage ring 26.

It will be understood that the structure described above can be modified in various ways, depending on the intended use. If it is desired to change the distance between the troughs, the connection between the various troughs and the end plate 4 has to be detached in the reverse order, profiled section 17 has to be replaced by a profiled section with a different spacing a, after which the structure can be reassembled.

Changes in the irrigation system and the like and in the design of the support are obvious to the person skilled in the art on reading the above description and lie within the scope of the appended claims.

## Claims

1. Elongate growing container (1), comprising a number of troughs (6), which are arranged next to one another, and are enclosed, in the vicinity of the ends, by end structures which are common to the said troughs, and a support (2) for said troughs and said end structures, **characterized in that**, at least at one end of said troughs, said end structure comprises an assembly comprising a profiled section (17), which receives the outer periphery of the troughs, and a clamping part (12), which is arranged on the trough and clamps at least the side walls of the said trough onto the said receiving profiled section.

2. Elongate growing container according to Claim 1, in which the trough-receiving profiled section is arranged exchangeably in the end structure. -

3. Elongate growing container according to one of the preceding claims, in which said end structure comprises a profiled section which delimits at least one water inlet/outlet channel.

4. Elongate growing container according to one of the preceding claims, in which said end structure comprises a profiled section which comprises at least one receptacle (19) for the said trough-receiving profiled section.

5. Elongate growing container according to one of the preceding claims, in which said end structure comprises a profiled section provided with engagement means (21) for said clamping part.

6. Elongate growing container according to one of the preceding claims, in which said clamping part is a wedge-shaped (13).

7. Elongate growing container according to one of the preceding claims, in which said support comprises a cross-bord (5).

8. Elongate growing container according to one of the preceding claims, in which said trough-receiving profiled section comprises a sealing profiled section.

9. Elongate growing container according to one of the preceding claims, in which, at the other end of said troughs, said end structure comprises a continuous strip of sealing, deformable material (16) into which said trough is pressed.

## Patentansprüche

1. Länglicher Zuchtbehälter (1) mit einer Anzahl von Wannen (6), die nebeneinander angeordnet sind und in der Nähe der Enden durch Endaufbauten verschlossen sind, die den Wannen gemeinsam sind, und einem Träger (2) für die Wannen und die Endaufbauten, **dadurch gekennzeichnet, dass** zumindest an einem Ende der Wannen der Endaufbau eine Anordnung mit einem Profilabschnitt (17), der den Außenumfang der Wannen aufnimmt, und einem Klemmteil (12) umfasst, das an den Wannen angeordnet ist und zumindest die Seitenwände der Wanne an den aufnehmenden Profilabschnitt klemmt.

2. Länglicher Zuchtbehälter nach Anspruch 1, bei dem der die Wanne aufnehmende Profilabschnitt in dem Endaufbau auswechselbar angeordnet ist.

3. Länglicher Zuchtbehälter nach einem der vorhergehenden Ansprüche, bei dem der Endaufbau einen Profilabschnitt umfasst, der zumindest einen Einlass-/Auslasskanal für Wasser begrenzt.

4. Länglicher Zuchtbehälter nach einem der vorhergehenden Ansprüche, bei dem der Endaufbau einen Profilabschnitt umfasst, der mindestens eine Aufnahme (19) für den die Wanne aufnehmenden Profilabschnitt umfasst.

5. Länglicher Zuchtbehälter nach einem der vorhergehenden Ansprüche, bei dem der Endaufbau einen Profilabschnitt umfasst, der mit einem Eingriffsmittel (21) für das Klemmteil versehen ist.

6. Länglicher Zuchtbehälter nach einem der vorhergehenden Ansprüche, bei dem das Klemmteil keilförmig (13) ist.

7. Länglicher Zuchtbehälter nach einem der vorhergehenden Ansprüche, bei dem der Träger ein Querbrett (5) umfasst.

8. Länglicher Zuchtbehälter nach einem der vorhergehenden Ansprüche, bei dem der die Wanne aufnehmende Profilabschnitt einen abdichtenden Profilabschnitt umfasst.

9. Länglicher Zuchtbehälter nach einem der vorhergehenden Ansprüche, bei dem der Endaufbau am anderen Ende der Wannen einen kontinuierlichen Streifen aus abdichtendem, verformbarem Material (16) umfasst, in den die Wanne gepresst ist.

## Revendications

1. Récipient de mise en culture allongé (1) comprenant un certain nombre de compartiments (6) qui sont disposés l'un à côté de l'autre et sont fermés, à proximité des extrémités, par des structures d'extrémité qui sont communes auxdits compartiments, et un support (2) pour lesdits compartiments et lesdites structures d'extrémité, **caractérisé en ce que**, au moins sur une extrémité desdits compartiments, ladite structure d'extrémité comprend un ensemble avec une section profilée (17) qui reçoit la périphérie extérieure des compartiments et une partie de bridage (12) qui est disposée sur le compartiment et bride au moins les parois latérales dudit compartiment sur ladite section profilée de réception.

2. Récipient de mise en culture allongé selon la revendication 1, dans lequel la section profilée recevant le compartiment est disposée de façon interchangeable dans la structure d'extrémité.

3. Récipient de mise en culture allongé selon l'une des revendications précédentes, dans lequel ladite structure d'extrémité comprend une section profilée qui délimite au moins un canal d'entrée/sortie d'eau.

4. Récipient de mise en culture allongé selon l'une des revendications précédentes, dans lequel ladite structure d'extrémité comprend une section profilée qui incorpore au moins un réceptacle (19) pour ladite section profilée recevant le compartiment.

5. Récipient de mise en culture allongé selon l'une des revendications précédentes, dans lequel ladite structure d'extrémité comprend une section profilée munie de moyens d'engagement (21) pour ladite partie de bridage.

6. Récipient de mise en culture allongé selon l'une des revendications précédentes, dans lequel ladite partie de bridage est en forme de coin (13).

7. Récipient de mise en culture allongé selon l'une des revendications précédentes; dans lequel ledit support comprend une plaque transversale (5).

8. Récipient de mise en culture allongé selon l'une des revendications précédentes, dans lequel ladite section profilée recevant le compartiment comprend une section profilée d'étanchéité.

9. Récipient de mise en culture allongé selon l'une des revendications précédentes, dans lequel, sur l'autre extrémité desdits compartiments, ladite structure d'extrémité comprend une bande continue de matériau d'étanchéité déformable (16) dans lequel est comprimé ledit compartiment.
